# EUROPEAN PATENT SPECIFICATION

(11) **EP 3 394 498 B1**
(45) Date of publication and mention of the grant of the patent: **29.01.2020**
(21) Application number: 16812761.1
(22) Date of filing: 20.12.2016
(51) Int. Cl.: F17C 1/00, B63B 25/16, B63B 3/68, F17C 3/10

(54) **SHIP CONTAINMENT SYSTEM FOR LIQUIFIED GASES**
RÜCKHALTESYSTEM FÜR VERFLÜSSIGTE GASE
SYSTÈME DE CONFINEMENT POUR GAZ LIQUÉFIÉS

(30) Priority: 22.12.2015 EP 15202067
(43) Date of publication of application: 31.10.2018
(73) Proprietor: Shell Internationale Research Maatschappij B.V., 2596 HR Den Haag (NL)
(72) Inventor: SAEED, Muhammad, Ahmer, Westminister London WC2R 0ZA (GB)
(74) Representative: Shell Legal Services IP
(86) International application number: PCT/EP2016/081871
(87) International publication number: WO 2017/108756

(56) References cited:
- WO-A1-2009/147162
- GB-A- 2 523 581
- JP-B2- 3 401 727
- US-A- 2 871 669
- US-A- 2 963 873
- US-A- 3 339 515
- US-B1- 6 453 680
- W. A. Amos: "Costs of Storing and Transporting Hydrogen", Costs of Storing and Transporting Hydrogen, 30 November 1998 (1998-11-30), XP055281520, DOI: 10.2172/6574 Retrieved from the Internet: URL:http://www1.eere.energy.gov/hydrogenan dfuelcells/pdfs/25106.pdf [retrieved on 2016-06-17]
- JINSONG ZHANG ET AL: "A Review of Heat Transfer Issues in Hydrogen Storage Technologies", JOURNAL OF HEAT TRANSFER., vol. 127, no. 12, 1 January 2005 (2005-01-01), page 1391, XP055281503, US ISSN: 0022-1481, DOI: 10.1115/1.2098875
- VARGHESE A P ET AL: "Transient shielded liquid hydrogen containers", INTERNATIONAL JOURNAL OF HYDROGEN ENERGY, ELSEVIER SCIENCE PUBLISHERS B.V., BARKING, GB, vol. 18, no. 1, 1 January 1993 (1993-01-01), pages 39-44, XP025651309, ISSN: 0360-3199, DOI: 10.1016/0360-3199(93)90101-F [retrieved on 1993-01-01]
- DAG PIKE: "First liquid hydrogen carrier", MOTORSHIP, NEXUS MEDIA COMMUNICATIONS, SWANLEY, KENT, GB, vol. 95, no. 1116, 1 June 2014 (2014-06-01), pages 44-45, XP001591806, ISSN: 0027-2000

## Description

### Field of the invention

The invention relates to a ship containment system for storing and/or transporting liquefied hydrogen and a marine transportation vessel comprising said containment system. Further, the invention relates to a process for managing insulation of said containment system and leakages thereof.

### Background to the invention

Hydrogen is an important industrial gas used in oil refining and fertilizer industries and in several other chemical processes. It is expected that hydrogen may additionally play a significant role as an energy carrier, in particular in the transportation sector.

In general, gases can be transported by means of pressure via pipelines for short distances. For long distances, gases are generally transported by means of marine transportation. In the absence of suitable pipeline networks for gaseous hydrogen, and for importation purposes, it is expected that hydrogen in liquid form will be one of the most effective ways for its supply and distribution. Due to the volumetric gains and to move any meaningful amount of energy economically, gaseous hydrogen may suitably be liquefied and then be transported in liquid form. One of the most practical ways to distribute hydrogen world-wide is the transportation of liquid hydrogen by marine transportation, i.e. by large ships / tankers. The containment construction on such a ship or tanker must be suitable for the transportation of liquid hydrogen, which has some very specific properties.

Two properties of gases are important in developing methods for their liquefaction: critical temperature and critical pressure. The critical temperature of a gas is the temperature at and above which it cannot be liquefied, no matter how much pressure is applied. The pressure required to liquefy the gas at its critical temperature is called the critical pressure. Differences in critical temperatures amongst gases mean that some gases are easier to liquefy than others. For example, the critical temperature of carbon dioxide is relatively high (31 °C), which means that that it can be liquefied relatively easily at or near room temperature (at critical pressure of about 73 bars). By comparison, the critical temperature of LNG is about -82 °C and the critical pressure is about 45 bars.

It will be understood that depending upon the critical temperatures and pressures certain gases can be liquefied more easily than others at or near ambient temperatures. Especially when the required pressure is relatively small, relatively large pressure vessels can be built which economically allow bulk transportation in liquefied form. In contrast, when high pressures are required for liquefaction, it is challenging to build larger pressure vessels which are still of economical relevance for bulk transportation of the liquefied gas.

During transportation of certain gases, like some Liquid Petroleum Gases (LPG), measures comprising applying in conjunction pressure and refrigeration/cooling are utilized to re-liquefy boil off gas and maintain the liquefied form of the gas. For certain gases, like natural gas, the critical pressure (about 45 bars) is quite high whereas the critical temperature (about -82 °C) is quite low. Generally, such gases are cooled to their normal boiling point and transported at or near ambient temperatures at atmospheric pressure. For example, liquefied natural gas (LNG) is transported at around -163 °C at atmospheric pressure. Liquid hydrogen needs to be treated similarly. For hydrogen to be in a full liquid state at atmospheric pressure, it needs to be cooled to -253 °C.

In WO2009/147162 A1 cryogenic containers are disclosed for storing a liquefied gas, such as liquefied natural gas, liquefied nitrogen, oxygen, carbon dioxide or hydrogen.

Tanks for shipping cryogenic liquefied gases at pressures close to atmospheric pressure are known. US3,339,5151 A, for example, relates to atmospheric pressure storage and transportation of volatile liquids. Other liquid gas storage devices and carrying vessel therefor are disclosed in JP 3401727 B2. Such cryogenic containment systems can generally be identified into two main types: membrane containment systems and so-called IMO Type B containment systems. For example, GB 2,523,581 A discloses marine vessel cryogenic systems of the IMO type. The type of containment system utilized mostly for shipping LNG is the membrane type containment system. In this system membranes are supported by the ships inner hull and the load of the cargo is borne by the inner hull. For the second type of cryogenic containment system a structurally self-supporting or free-standing cargo tank is utilized which is spaced or separated from the ship's inner hull and inner sides. Since such cargo tanks are structurally independent of the ship's hull, the strength of the hull is not relevant for the containment function of the tanks. One design of such an independent IMO Type B cargo containment system utilizes spherical tanks, see e.g. U.S. Patents Nos. 3,677,021 and 3,680,323 (Moss Maritime): spherical tanks have been mounted in the ship hold on a metal cylindrical skirt with the tank bottom located above the ship inner hull. Other IMO Type B cargo containment systems utilize rectangular/ prismatic type tanks (IHI SPB, Japan), which are supported over a number of supports sitting underneath the tanks.

For efficient transport, it is required that the temperature of the liquefied gas stored in the cryogenic containment system remains close to the temperature at which it has been loaded. Heat ingress into the containment system will lead to the boiling off of liquefied gas carried and the gas generated will increase the pressure in the tank if not removed from the tanks. Means to manage the Natural Boil Off Gas (NBOG) include utilization in boilers and/or engines, or re-liquefaction. Re-liquefaction however requires very significant amounts of power, and therefore requires the presence of a big electrical generation facility onboard as well. Further, for LNG carriers Dual Fuel Diesel Electric (DFDE) propulsion systems are increasingly used instead of steam turbines, the traditionally used propulsion system of LNG carriers, to improve the fuel efficiencies. Steam turbines have much lower efficiencies than the DFDE's. However, with the use of DFDE's the situation of excessive gas availability becomes a concern on LNG carriers. Reducing boil off rate (BOR) of liquefied gas is therefore desired: currently LNG carriers in service with spherical tanks are guaranteed for 0.15% BOR, however for newly built LNG carriers rates of up to 0.1% are also known. In the new carriers, the containment systems are heavily insulated to prevent heat ingress into the tank. Two main areas of heat ingress can be identified, one from the surroundings and the second through the conduction from the metal skirt arrangement.

The IMO Type B Spherical cargo containment systems are mainly utilized in LNG marine transportation, but such systems can also be considered for carrying other liquefied gases, like liquid hydrogen, liquid nitrogen, liquid oxygen and the like. The carriage of other cargos may however lead to the need of other specific technical requirements. For example, for a cargo of liquid hydrogen an increase of BOR is expected even with increased insulation. The latent heat per volume unit of liquid hydrogen is approximately one seventh of that of LNG. Further, the difference in temperature between the temperature of hydrogen as a liquid (at its normal boiling point) and ambient temperature is close to 1.5 times the comparable temperature difference of LNG. As a result, liquid hydrogen is about ten times easier to evaporate than LNG at the same ambient temperature. This raises the need of finding novel solutions to reduce heat ingress into the hydrogen containment system to keep the BOR within acceptable limits.

In the current design of IMO Type B Spherical cargo containment systems the spherical tank is supported by a so-called skirt arrangement, which is an arrangement mounted on a ship that holds the tank above a ship's hull. Generally, the skirt arrangement is a metal plate welded at the upper part to the peripheral portion of the spherical tank and at the lower part welded to the ship's hull. The skirt arrangement provides rigidity to the hull structure and minimizes the transference of stresses from the hull structure to the tank. See for example US 3,677,021. The skirt arrangement in the IMO Type B Spherical cargo containment systems further contains a structural transition joint (STJ). The structural transition joint functions as a thermal break, or thermal barrier, which is an element of low thermal conductivity placed in an assembly to reduce or prevent the flow of thermal energy between conductive materials. Heat conduction into the tank from the skirt in the current IMO Type B Spherical cargo containment systems is known to be in the region of 20-30% of the total heat ingress into the cargo tank. Remaining heat ingress is from the environment into ship's hull/hold space and into the cargo tank or through the dome areas exposed on open decks. Similarly, for self-supporting prismatic shape IMO type B (SPB) tanks heat ingress is through supports and surroundings. Heat ingress is reduced by means of insulating the tank outer surface. Regular expansion and contraction of tank poses challenge and insulation must be designed and installed with care to cater for these conditions for anticipated vessel life. Where IMO Type B tanks (cargo containment system) is mainly utilized in LNG marine transportation, it can also be considered for carrying liquid hydrogen, liquid nitrogen, liquid oxygen or other liquefied gases. If carriage of cargo like liquid hydrogen is considered, then an increase of BOR, even with considerable increased insulation, is expected. There is a need to reduce the heat ingress into the tank to the highest extent possible.

### Summary of the invention

The present invention provides means for reducing heat ingress into the ship's cargo tank, especially for transportation of liquid hydrogen.

Accordingly, the present invention provides a ship containment system for storing and/or transporting liquefied hydrogen, which system comprises a spherical cargo tank arrangement within the ship's hull, wherein
(a) the cargo tank is supported by a skirt arrangement mounted on the hull of the ship through which the tank is mounted in the ship without direct contact between outer layer of the cargo tank [4] and the hull, with hold spaces [10] between the cargo tank and the hull, and comprising a structural transition joint [8] between the upper part of the skirt and the lower part of the skirt; and
   which system is further provided with
(b) a pump for loading and discharging the liquefied gas located in a pump tower [1];
(c) a tank cover [2];
(d) a cargo tank insulation layer [3] that is applied to the outer layer of the cargo tank [4];
   wherein:
   - the inner side of the ship's hull [6] is provided with an insulation layer [11], covered by an internal lining at the side of the hold spaces [10], being any suitable foil at the vertical sides of the inner hull, and at the sides below the cargo tank on the bottom of the ship's hull structure [9] being a membrane showing minimal expansion and/or contraction under the conditions applied;
   - the hold spaces [10] are filled with an inert gas and are provided with means for managing pressure and means for monitoring temperature;
   - the skirt is mounted on the hull structure with a mounting setup that comprises a insulating layer in between the skirt and the inner side of the inner hull [6]; and the tank cover (2) is provided with an internal insulation layer [12].

The containment system of the present invention is ideally suited for use in marine transportation vessels, and particularly for transportation of liquid hydrogen.

### Brief description of the drawings

In Figure 1, a spherical tank cargo containment system according to the prior art is schematically shown.
In Figure 2, a spherical tank cargo containment system according to this invention is schematically shown.

### Detailed description of the invention

The insulation of a conventional LNG container's cargo tank is designed for managing a temperature differential of -163 °C in tank temperature to about 45 °C (ambient temperature), i.e. around -208 °C. In case of liquid hydrogen this differential is in the order of -298 °C. Analysis indicates that to have a BOR in the order of about 0.3-0.4% in a very large liquid hydrogen container ship, the amount of insulation materials required could be in the order of 600-1000 mm or even more in thickness and most likely in multi-layer configuration. Where insulation is thicker (3-5+ times of current practice in LNG containers) this raises significant concerns regarding the longevity and reliability required for 30-40 years of life expectancy. Notably, the associated BOR is considerably higher too (in comparison to 0.1-0.15% in LNG industry) and is expected to be higher than the vessel fuelling requirements for big commercial scale ships. This raises the need of finding novel solutions to (a) reduce the heat ingress into the tank to keep the BOR within acceptable limits and (b) to develop a robust insulating solution keeping in mind the longevity required from the vessels carrying liquefied gases and (c) to manage the insulation space around the tank.

According to the invention, a combination of measures provides a solution to the problems described above.

The inner side of the hull ("inner hull") is insulated, for example using insulating materials like polyurethane foam, phenolic resin foam or similar, preferably polyurethane foam (PUF) panels, however other insulating materials may also be considered. The insulation layer of the inner hull is covered by an internal lining at the sides and optionally the upper part of the hold spaces, being a wood, suitable foil, such as tin foil, preferably an anti- radiation foil, at the vertical sides of the inner hull, and at the sides below the cargo tank being a membrane showing minimal expansion and/or contraction under the conditions applied, preferably a membrane suitable to withstand liquid hydrogen temperatures. Preferably such membrane material is invar steel. Other suitable materials may be selected from stainless steel, composite materials suitable for cryogenic conditions or SPS (Sandwich Plate System), as known in the art. Apart from improving insulation, such membrane also functions as a secondary barrier in case of cargo containment tank failure. Liquid leaks will result in collection at the bottom of the ship's inner hull insulated tank structure, which comprises the membrane according to the present invention.

Further, the tank cover is provided with an internal insulation layer of suitable materials and of acceptable thickness. For qualifying as appropriate insulating materials, these materials will have to comply with the requirement of reduced thermal conductivity when compared to the materials of which the tank cover itself is made, but a further preferred additional characteristic is the ability to withstand cryogenic temperatures, and another preferred characteristic is fire resistance. Preferably, the insulation material is resistant to environmental factors, including humidity. Suitable materials for insulation are selected from wood, composites and high density foams. Insulation materials utilized for insulating the tank cover are selected from PTFE (polytetrafluoroethylene) or injection molded composites, or any other materials which are suitable for use at cryogenic temperatures or any combination of such materials.

Further, the hold spaces are provided with means for managing pressure and means for monitoring temperature. This allows filling the hold spaces with inert gases, preferably gaseous nitrogen at a low temperature, instead of the dry air that is used in current designs for LNG transport. Nitrogen has a thermal conductivity of 0.024 kW/(m.K) at 25 °C as compared for example to 43 for carbon steel, 16 for stainless steel, 0.03 for PUF and 0.31 for Perlite. Nitrogen gas filled in the hold spaces fulfills various purposes including removing the fire risk of any gas vapour leak from the cargo tank through the insulation layer into the hold spaces and improving the overall insulation effect, reducing the heat ingress into the cargo tank. Therefore, accordingly the present invention further provides a process for insulating the containment system of this invention, comprising filling the hold spaces with gaseous nitrogen, while keeping the nitrogen pressure in the hold spaces at a low pressure (about 3-5 mbar) that is lower than the internal pressure of the cargo tank containing a liquefied gas. Preferably, the temperature in the hold spaces is kept between -10 °C and -60 °C, more preferably between -30 °C and -50 °C.

Preferably, the insulation layer at the inner side of the ship's hull and/or the hold spaces are also provided with moisture detection sensors to monitor possible ingress of seawater into the hold space insulation, e.g. from ballast tank, entering the hold space insulation via cracks etc. in the ship's (steel) plating. These sensors will give alarm in case of presence of liquid in the hold spaces.

The hold spaces may intermittently need to be inspected. For that purpose, the hold spaces are also provided with (an) air line(s) to vent the space for preparation of inspections and dry docking, etc. Further, the system is protected by means of pressure relief valves and lines for venting out air and/or gases.

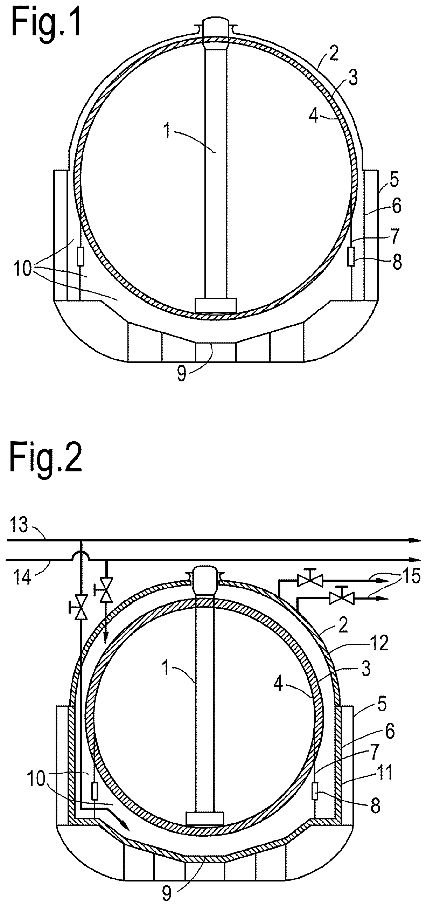

The ship containment system of the invention further comprises a cargo tank insulation layer that is applied to the outer layer of the cargo tank, which layer is somewhat thicker than in the conventional LNG carriers and could approximately be in the region of 125-175% of existing utilized thickness (i.e. up to 150 mm in absolute terms). Insulation materials may be similar to those used in the tank cover insulation. In the current LNG containers (LNGC's) the insulation space around the tank (see Fig. 1, ref. [3]) is purged with nitrogen gas. Where nitrogen (liquefaction temperature of -196 °C) is used to perform purging (in order to manage - minor - leakages from the hold spaces and/or cargo tank) of insulation spaces on LNGC satisfactorily, it will liquefy and even freeze if applied to liquid hydrogen cargo tanks insulation spaces. For application in liquid hydrogen container systems gases which are inert in nature and have liquefaction temperature lower than -253 °C can be utilized for the leak detection and expulsion of nitrogen entering the cargo tank insulation layer. This leaves a gas like helium to be suitable. However, helium being finite and expensive, and the significant amount being required on large vessels with thick insulations, will pose a challenge for the vessels in actual service. Therefore, according to an embodiment of the present invention hydrogen vapor is used to fill the cargo tank insulation layer. Accordingly, the cargo tank insulation layer is provided with a means for managing pressure to manage the gases utilized for leak detection from cargo tank and for expulsion of possible entry of nitrogen from the hold spaces into the cargo tank insulation layer. Therefore, accordingly the present invention further provides a process for managing leakages, i.e. leak detection and nitrogen expulsion from the insulation of the containment system of this invention, comprising filling the cargo tank insulation layer with gaseous hydrogen and keeping the hydrogen pressure in the insulation layer at a constant pressure, slightly higher than the nitrogen pressure in the hold spaces. Suitably, the hydrogen pressure in the insulation layer will be in the range of 2-10 mbar, preferably 5-7 mbar, as long as the nitrogen pressure in the hold spaces is lower.

The cargo tank of the present invention is a spherical tank. In the arrangement of spherical tanks, a structural transition joint (STJ) in the skirt is provided. The lower part of the skirt will be subjected to lower temperatures and hence the material of the lower part of skirt is selected accordingly, as the lower skirt needs to be insulated or otherwise STJ must be located at the bottom part. Accordingly, the cargo tank is supported by a skirt arrangement mounted on the hull of the ship, and wherein the skirt is mounted on the hull structure with a mounting setup that comprises an insulating layer in between the skirt and the inner side of the inner hull, such as disclosed in EP 14197674.6.

### Detailed description of the drawings

In Figure 1, an example according to the prior art is schematically shown of a spherical tank cargo containment system with a skirt and hull connection arrangement, wherein [1] is a pump tower for housing the cargo pumps and loading and discharging pipelines, [2] a tank cover providing a layer around the outer surface of the tank system for weather protection, [3] a tank insulation layer to reduce heat ingress from the surroundings, comprising panel insulation of polyurethane foam and/or phenolic resin foam or polystyrene foam and/or a layer of dry nitrogen gas, [4] the outer layer of the cargo tank, [5] the ship's hull, wherein [6] is the inner side of the ship's hull, which is double sided, [7] is a tank skirt, through which the tank is mounted on the hull, [8] a structural transition joint (STJ), which is a thermal break between the upper part of the skirt and the lower part of the skirt, which may comprise layers of different materials, [9] shows the double bottom of the ship's hull structure, which provides a ballast space, and [10] are hold spaces, being empty spaces between the cargo tank and the hull, filled with dry air at ambient temperature.

In Figure 2, an example of a spherical tank cargo containment system according to the present invention is shown, wherein the numbers [1] - [10] refer to the same features as in Figure 1, further [11] refers to the inner hull insulation layer, [12] is the tank cover insulation layer, [13] is a feed air line, [14] a line for nitrogen and [15] are lines for venting out air/gases. Not shown in Fig. 2 is a line for hydrogen and means for maintaining pressure and means for leak detection, which however are present in an embodiment of the invention where the cargo tank insulation layer [3] is filled with hydrogen and maintained under constant pressure.

## Claims

1. A ship containment system for storing and/or transporting liquefied hydrogen, which system comprises a spherical cargo tank arrangement within the ship's hull, wherein
(a) the cargo tank is supported by a skirt arrangement mounted on the hull of the ship through which the tank is mounted in the ship without direct contact between outer layer of the cargo tank [4] and the hull, with hold spaces [10] between the cargo tank and the hull, and comprising a structural transition joint [8] between the upper part of the skirt and the lower part of the skirt; and
which system is further provided with
(b) a pump for loading and discharging the liquefied gas located in a pump tower [1];
(c) a tank cover [2];
(d) a cargo tank insulation layer [3] that is applied to the outer layer of the cargo tank [4];
wherein:
- the inner side of the ship's hull [6] is provided with an insulation layer [11], covered by an internal lining at the side of the hold spaces [10], being any suitable foil at the vertical sides of the inner hull, and at the sides below the cargo tank on the bottom of the ship's hull structure [9] being a membrane showing minimal expansion and/or contraction under the conditions applied;
- the hold spaces [10] are filled with an inert gas and are provided with means for managing pressure and means for monitoring temperature;
- the skirt is mounted on the hull structure with a mounting setup that comprises a insulating layer in between the skirt and the inner side of the inner hull [6]; and
- the tank cover (2) is provided with an internal insulation layer [12].

2. A ship containment system of claim 1, wherein the inert gas is gaseous nitrogen at a low temperature.

3. A ship containment system of claim 1 or 2, wherein cargo tank insulation layer [3] is filled with gaseous hydrogen.

4. A ship containment system of claim 3, wherein cargo tank insulation layer [3] is provided with a means for leak detection and further means for managing pressure.

5. A ship containment system of any one of claims 1-4, wherein the insulation layer [11] and/or the hold spaces [10] are provided with moisture detection sensors.

6. A marine transportation vessel comprising a ship containment system according to any one of claims 1-5.

7. A process for managing insulation of a ship containment system of any one of claims 1-5, comprising filling the hold spaces [10] with gaseous nitrogen at a low temperature and keeping the nitrogen pressure in the hold spaces [10] at a pressure that is lower than the internal pressure of the cargo tank [4] containing hydrogen.

8. A process of claim 7, wherein the temperature in the hold spaces [10] is kept between -10 °C and -60 °C.

9. A process of claim 7 or 8, wherein the cargo tank insulation layer [3] is provided with a means for leak detection and a means for managing pressure, comprising filling the cargo tank insulation layer [3] with gaseous hydrogen and keeping the hydrogen pressure in the insulation layer [3] slightly higher than the gaseous nitrogen pressure in the hold spaces [10], the gaseous nitrogen being at a pressure of 3-5 mbar.

## Patentansprüche

1. Rückhaltesystem für ein Schiff zum Lagern und/oder Transportieren von Flüssigwasserstoff, wobei das System eine kugelförmige Ladetankanordnung innerhalb des Schiffsrumpfs umfasst, wobei
(a) der Ladetank durch eine Ummantelungsanordnung getragen wird, die auf dem Rumpf des Schiffs befestigt ist, durch die der Tank in dem Schiff ohne direkte Berührung zwischen einer äußeren Schicht des Ladetanks [4] und dem Rumpf befestigt ist, mit Aufnahmezwischenräumen [10] zwischen dem Ladetank und dem Rumpf, und eine strukturelle Übergangsverbindung [8] zwischen dem oberen Teil der Ummantelung und dem unteren Teil der Ummantelung umfassend; und
wobei das System ferner mit Folgendem versehen ist
(b) einer Pumpe zum Befüllen und Ablassen des Flüssiggases, das sich in einem Pumpenturm [1] befindet;
(c) einer Tankabdeckung [2];
(d) einer Ladetankisolierschicht [3], die auf die äußere Schicht des Ladetanks [4] aufgebracht ist;
wobei:
- die innere Seite des Schiffsrumpfs [6] mit einer Isolierschicht [11] versehen ist, die an der Seite der Aufnahmezwischenräume [10] durch eine Innenverkleidung, die eine beliebige geeignete Folie an den vertikalen Seiten des inneren Rumpfes ist, und an den Seiten unter dem Ladetank an dem Boden der Schiffsrumpfstruktur [9] abdeckt ist, die eine Membran ist, die eine Mindestausdehnung und/oder - zusammenziehung unter den angewandten Bedingungen zeigt;
- die Aufnahmezwischenräume [10] mit einem Inertgas gefüllt sind und mit Mitteln zum Verwalten eines Drucks und Mitteln zum Überwachen einer Temperatur versehen sind;
- die Ummantelung auf der Rumpfstruktur mit einem Befestigungsaufbau befestigt ist, der eine Isolierschicht zwischen der Ummantelung und der inneren Seite des inneren Rumpfes [6] umfasst; und
- die Tankabdeckung (2) mit einer Innenisolierschicht [12] versehen ist.

2. Rückhaltesystem für ein Schiff nach Anspruch 1, wobei das Inertgas gasförmiger Stickstoff bei einer niedrigen Temperatur ist.

3. Rückhaltesystem für ein Schiff nach Anspruch 1 oder 2, wobei die Ladetankisolierschicht [3] mit gasförmigem Wasserstoff gefüllt ist.

4. Rückhaltesystem für ein Schiff nach Anspruch 3, wobei die Ladetankisolierschicht [3] mit einem Mittel zum Erfassen eines Lecks und ferner Mitteln zum Verwalten eines Drucks versehen ist.

5. Rückhaltesystem für ein Schiff nach einem der Ansprüche 1-4, wobei die Isolierschicht [11] und/oder die Aufnahmezwischenräume [10] mit Feuchtigkeitserfassungssensoren versehen sind.

6. Seetransportwasserfahrzeug, umfassend ein Rückhaltesystem für ein Schiff nach einem der Ansprüche 1-5.

7. Vorgang zum Verwalten einer Isolierung eines Rückhaltesystems für ein Schiff nach einem der Ansprüche 1-5, umfassend ein Füllen der Aufnahmezwischenräume [10] mit gasförmigem Stickstoff bei einer niedrigen Temperatur und Halten des Stickstoffdrucks in den Aufnahmezwischenräumen [10] bei einem Druck, der niedriger ist als der Innendruck des Ladetanks [4], der Wasserstoff enthält.

8. Vorgang nach Anspruch 7, wobei die Temperatur in den Aufnahmezwischenräumen [10] zwischen -10 °C und - 60 °C gehalten wird.

9. Vorgang nach Anspruch 7 oder 8, wobei die Ladetankisolierschicht [3] mit einem Mittel zum Erfassen eines Lecks und einem Mittel zum Verwalten des Drucks versehen ist, umfassend das Füllen der Ladetankisolierschicht [3] mit gasförmigem Wasserstoff und Halten des Wasserstoffdrucks in der Isolierschicht [3] etwas höher als der Druck des gasförmigen Stickstoffs in den Aufnahmezwischenräumen [10], wobei der gasförmige Stickstoff bei einem Druck von 3-5 Bar liegt.

## Revendications

1. Système de confinement de navire pour stocker et/ou transporter de l'hydrogène liquéfié, ce système comprenant un agencement de citerne à cargaison sphérique à l'intérieur de la coque du navire, dans lequel
(a) la citerne à cargaisons est supportée par un agencement de jupe monté sur la coque du navire, à travers lequel la citerne est montée sur le navire sans contact direct entre la couche extérieure de la citerne à cargaisons [4] et la coque, avec des compartiments de cale [10] entre la citerne à cargaisons et la coque, et comprenant un joint de transition structurel [8] entre la partie supérieure de la jupe et la partie inférieure de la jupe ; et lequel système est en outre doté
(b) d'une pompe pour charger et décharger le gaz liquéfié situé dans une tour de pompe [1] ;
(c) d'un couvercle de citerne [2] ;
(d) d'une couche isolante de citerne à cargaisons [3] appliquée sur la couche extérieure de la citerne à cargaisons [4] ;
dans lequel :
- le côté intérieur de la coque du navire [6] est pourvu d'une couche isolante [11] recouverte d'un revêtement interne situé du côté des compartiments de cale [10], toute feuille appropriée se trouvant des côtés verticaux de la coque intérieure, et sur les côtés situés sous la citerne à cargaisons, sur le fond de la structure de coque du navire [9], une membrane présentant une dilatation et/ou une contraction minimale dans les conditions appliquées ;
- les compartiments de cale [10] sont remplis d'un gaz inerte et sont dotés d'un moyen de gestion de pression et d'un moyen de surveillance de température ;
- la jupe est montée sur la structure de la coque avec une configuration de montage qui comprend une couche isolante entre la jupe et le côté intérieur de la coque intérieure [6] ; et
- le couvercle de la citerne (2) est doté d'une couche isolante interne [12].

2. Système de confinement de navire selon la revendication 1, dans lequel le gaz inerte est de l'azote gazeux à basse température.

3. Système de confinement de navire selon la revendication 1 ou 2, dans lequel la couche isolante de citerne à cargaisons [3] est remplie d'hydrogène gazeux.

4. Système de confinement de navire selon la revendication 3, dans lequel la couche isolante de citerne à cargaisons [3] est dotée d'un moyen de détection de fuite et d'un moyen supplémentaire de gestion de pression.

5. Système de confinement de navire selon l'une quelconque des revendications 1 à 4, dans lequel la couche isolante [11] et/ou les compartiments de cale [10] sont dotés de capteurs de détection d'humidité.

6. Navire de transport maritime comprenant un système de confinement de navire selon l'une quelconque des revendications 1 à 5.

7. Procédé pour la gestion de l'isolation d'un système de confinement de navire selon l'une quelconque des revendications 1 à 5, consistant à remplir les compartiments de cale [10] avec de l'azote gazeux à une température basse et maintenir la pression de l'azote dans les compartiments de cale [10] à une pression inférieure à la pression interne de la citerne à cargaisons [4] contenant de l'hydrogène.

8. Procédé selon la revendication 7, dans lequel la température dans les compartiments de cale [10] est maintenue entre -10 °C et -60 °C.

9. Procédé selon la revendication 7 ou 8, dans lequel la couche isolante des citernes à cargaisons [3] est dotée d'un moyen de détection de fuite et d'un moyen de gestion de pression, consistant à remplir la couche isolante de citerne à cargaisons [3] avec de l'hydrogène gazeux et maintenir la pression d'hydrogène dans la couche isolante [3] légèrement supérieure à la pression d'azote gazeux dans les compartiments de cale [10], l'azote gazeux étant à une pression de 3 à 5 mbar.
